# FASCICULE DE BREVET EUROPEEN

(11) **EP 1 681 809 B1**
(45) Date de publication et mention de la délivrance du brevet: **14.03.2012**
(21) Numéro de dépôt: 06290073.3
(22) Date de dépôt: 11.01.2006
(51) Int. Cl.: H04L 12/40

(54) **Dispositif de conditionnement d'information pour véhicules automobiles et industriels**
Vorrichtung zur Informationsvorbereitung für Kraftfahrzeuge und Industriefahrzeuge
Apparatus for data conditioning for automobile and industrial vehicles

(30) Priorité: 12.01.2005 FR 0500298
(43) Date de publication de la demande: 19.07.2006
(73) Titulaire: Societé Jallasienne de Distribution So Ja Dis, 49510 Jallais (FR)
(72) Inventeur: Humeau, Jean-Marie, 49150 Jallais (FR)
(74) Mandataire: Laget, Jean-Loup

(56) Documents cités:
- US-A- 6 006 143

## Description

La présente invention se rapporte à un réseau multiplexé pour véhicule, comportant un dispositif de conditionnement d'informations apte à échanger des informations d'une part avec le réseau multiplexé et d'autre part avec un boîtier de commande supplémentaire.

Dans les véhicules actuels, il existe de plus en plus d'équipements utilisant l'électronique, notamment des capteurs, tel que capteurs d'ABS (Anti Blocage de Sécurité), de pluie, de pression des pneus, etc. Ces capteurs sont souvent assez loin du calculateur central de l'équipement en question, par exemple le calculateur central gérant l'ABS doit être relié à des capteurs situés sur les quatre roues. Une telle installation génère des dizaines de mètres de fils électriques disséminés dans la voiture. De plus, certains équipements utilisent des capteurs d'autres équipements. Par exemple, l'ESP (Electronic Stability Program), qui stabilise la voiture sur la trajectoire choisie par le conducteur en agissant sur les freins et/ou l'accélérateur, utilise l'ABS. Pour remédier à cette multiplication des fils électriques, les constructeurs utilisent aujourd'hui des réseaux multiplexés pour assurer la communication entre les différents équipements des véhicules. Le principe du multiplexage consiste à relier sur un même bus des équipements dialoguant entre eux. On réduit ainsi la quantité de fils nécessaire et donc le risque de panne électronique. En outre, en cas de panne, la réparation est plus simple.

Le document US 6 006 143 décrit un système de commande d'un véhicule automobile comportant un processeur central et des processeurs satellites. Les processeurs satellites sont reliés au processeur central par l'intermédiaire d'un bus. Des éléments de commande électriques, par exemple des commutateurs, sont également branchés sur le processeur central. Des signaux de commande et des signaux de contrôle sont transmis sur le bus, de manière bidirectionnelle, entre le processeur central et les processeurs satellites.

Le document EP0874502 concerne un système de communication pour véhicule qui comprend une pluralité d'équipements connectés à un réseau par l'intermédiaire de routeurs connectés les uns aux autres.

Le document FR2812437 décrit un dispositif de communication entre un équipement extérieur à un véhicule automobile et des calculateurs embarqués reliés entre eux par au moins un bus CAN. Le dispositif de communication comprend un module qui forme une passerelle entre le bus CAN du véhicule et le bus USB de l'équipement extérieur.

Pour permettre la communication entre ces différents équipements, un protocole de communication définit des règles de transmission, telles que le mode de transmission (analogique ou numérique), le type de code, l'adressage, la détection des erreurs, par exemple.

Un protocole couramment utilisé est le protocole CAN (controler area network). Ce protocole implique l'envoi d'un message identificateur de 11 bits ou 29 bits permettant au seul récepteur concerné de prendre en compte la suite du message qui peut comporter jusqu'à 8 octets de données. Le partage des communications s'effectue selon des priorités préalablement établies afin d'éviter les conflits sur le bus, certains actionneurs ou capteurs étant évidemment prioritaires, le plus souvent pour des raisons de sécurité. Chaque équipement du véhicule reconnaît le signal codé qui lui est propre et en extrait les données qui lui sont utiles pour le traitement de la fonction dont il est en charge, ou, si ces données concernent l'état général de cet équipement, il les interprète comme un ordre, qui peut être par exemple la réduction ou l'arrêt total de sa consommation.

En général, l'architecture électrique et électronique s'articule autour d'un boîtier électronique central de gestion qui centralise et traite les informations issues du réseau. En outre, le réseau peut être divisé en sous-réseaux, qui peuvent être électriquement indépendants ou non, utilisant le protocole CAN avec différentes vitesses de transmission ou le protocole VAN (vehicle aera network), ou tout autre type de protocole. Typiquement, on trouve un sous-réseau dédié à l'ABS, au contrôle des moteurs, à la boîte de vitesses automatique, à l'ESP, un sous-réseau dédié au confort (écrans multifonctions, climatisation, guidage embarqué, radio), un sous-réseau dédié à la carrosserie (sièges et portes) et un sous-réseau dédié aux fonctions de sécurité (airbags, feux de signalisation). Le boîtier électronique central du véhicule est relié à chaque sous-réseau par un bus dédié audit sous-réseau.

Cependant, dans les véhicules utilisant le multiplexage, il est actuellement très difficile, une fois que le réseau a été conçu et industrialisé, de modifier ou d'ajouter des fonctions, notamment du fait des systèmes de codage utilisés par les constructeurs. Ainsi, pour récupérer une information disponible sur le réseau, afin de connecter un équipement supplémentaire, par exemple, un utilisateur qui ne dispose pas du code utilisé par le constructeur doit connecter un câble sur la carte qui dispose de l'information. Cela a pour inconvénient de rajouter des câbles. De plus, la taille des cartes électroniques ayant diminué, il devient difficile de souder un câble supplémentaire sans risquer d'endommager le système d'origine. D'autre part, l'information désirée n'est pas nécessairement accessible lorsqu'elle résulte d'un traitement interne à un composant, par exemple du calcul interne d'un microcontrôleur dépendant de plusieurs paramètres, comme par exemple la vitesse du véhicule, et que cette information n'existe que sous forme numérique à l'intérieur d'une trame de données transmise sur un réseau multiplexé.

La présente invention a pour but de proposer un dispositif électronique apte à être connecté à un réseau multiplexé, par exemple dans un véhicule, qui évite au moins certains des inconvénients précités et qui permette de réaliser des réseaux multiplexés plus facilement évolutifs.

A cet effet, l'invention a pour objet un réseau multiplexé conforme à la revendication 1.

Avantageusement, ledit boîtier d'acquisition et de traitement supplémentaire comporte une interface homme-machine.

De préférence, ledit boîtier d'acquisition et de traitement supplémentaire communique avec ledit dispositif de conditionnement d'information par une liaison sans fil.

Selon un mode de réalisation de l'invention, ledit boîtier d'acquisition et de traitement supplémentaire est apte à émettre une information de doublage associée audit au moins un équipement, apte à doubler ladite au moins une information associée audit au moins un équipement.

Selon une caractéristique de l'invention, ledit dispositif de conditionnement d'informations comporte au moins une interface supplémentaire apte à permettre la connexion d'un équipement supplémentaire avec ledit dispositif de conditionnement d'informations.

Avantageusement, ledit dispositif de conditionnement d'informations comporte au moins une interface utilisant le protocole LIN.

Avantageusement, ledit dispositif de conditionnement d'informations comporte au moins une interface utilisant le protocole USB.

Avantageusement, ledit dispositif de conditionnement d'informations comporte au moins une interface utilisant le protocole RS232.

De préférence, ledit dispositif de conditionnement d'informations comporte au moins une entrée analogique et une sortie analogique.

L'invention a également pour objet un dispositif de conditionnement d'informations conforme à la revendication 10.

L'invention sera mieux comprise, et d'autre buts, détails, caractéristiques et avantages de celle-ci apparaîtront plus clairement au cours de la description explicative détaillée qui va suivre, de plusieurs modes de réalisation de l'invention donnés à titre d'exemples purement illustratifs et non limitatifs, en référence aux dessins schématiques annexés.
Sur ces dessins :
- la figure 1 est une vue simplifiée d'un réseau multiplexé pour véhicule montrant le dispositif électronique selon un mode de réalisation de l'invention ;
- la figure 2 est une vue schématique structurelle du dispositif électronique de la figure 1 ;
- la figure 3 est une vue schématique structurelle d'une télécommande permettant de communiquer avec le dispositif de la figure 2 ; et
- la figure 4 est une vue simplifiée montrant le dispositif de la figure 2 connecté d'une part au réseau multiplexé et d'autre part à un équipement du véhicule.

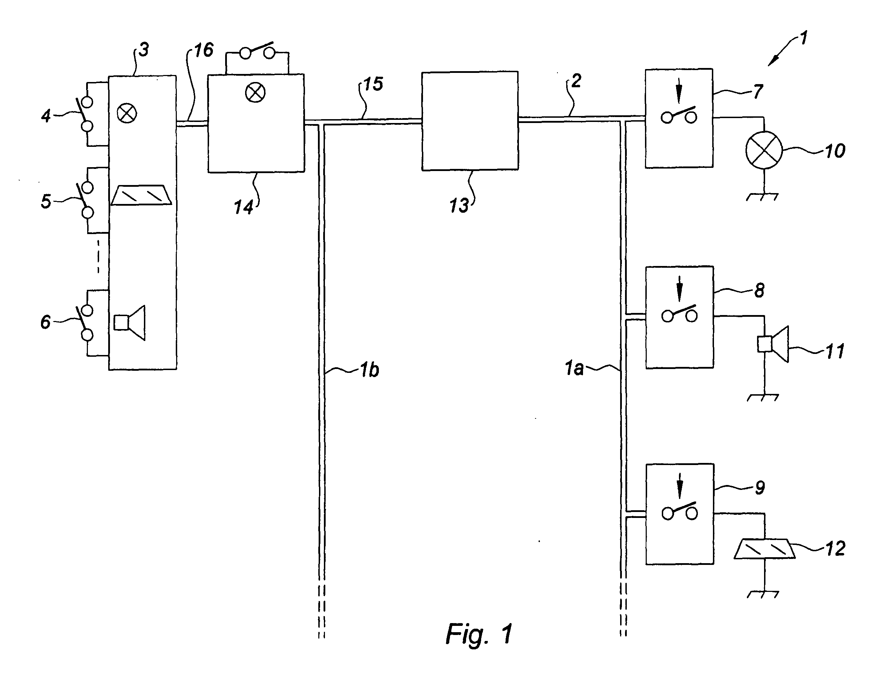

En se référant à la figure 1, on voit un réseau multiplexé 1 comportant deux sous-réseaux 1a et 1b. Le réseau 1 comporte un bus de transmission de données 16 qui relie un boîtier électronique 3 d'acquisition d'informations provenant de trois interrupteurs de commande 4,5,6 avec un dispositif de conditionnement d'informations 14 selon l'invention, un bus de transmission de données 15 qui relie le dispositif 14 avec un boîtier électronique central de gestion 13 et un bus de transmission de données 2 qui relie le boîtier 13 avec trois boîtiers électroniques d'acquisition et de traitement déportés 7,8,9 reliés à trois équipements 10,11,12. Le réseau 1 est destiné à être utilisé dans un véhicule (non représenté), les équipements 10,11,12 étant des équipements du véhicule utilisant l'énergie électrique du véhicule mais commandés électroniquement.

Les trois interrupteurs de commande 4,5,6 sont connectés au boîtier d'acquisition 3. Chaque interrupteur 4,5,6 est associé à un équipement 10,11,12 du véhicule, par exemple les phares, les essuie-glaces et le klaxon, par l'intermédiaire d'un boîtier déporté 7,8,9. Chaque boîtier déporté 7,8,9 est connecté à un équipement 10,11,12. Le boîtier électronique central de gestion 13 permet de contrôler les signaux qui sont émis par le boîtier 3, le dispositif 14 ou par des capteurs (non représentés) et d'émettre des signaux de commande à destination des boîtiers 7,8,9 des équipements 10,11,12 qui doivent être commandés. Le protocole de transmission utilisé est par exemple le protocole CAN.

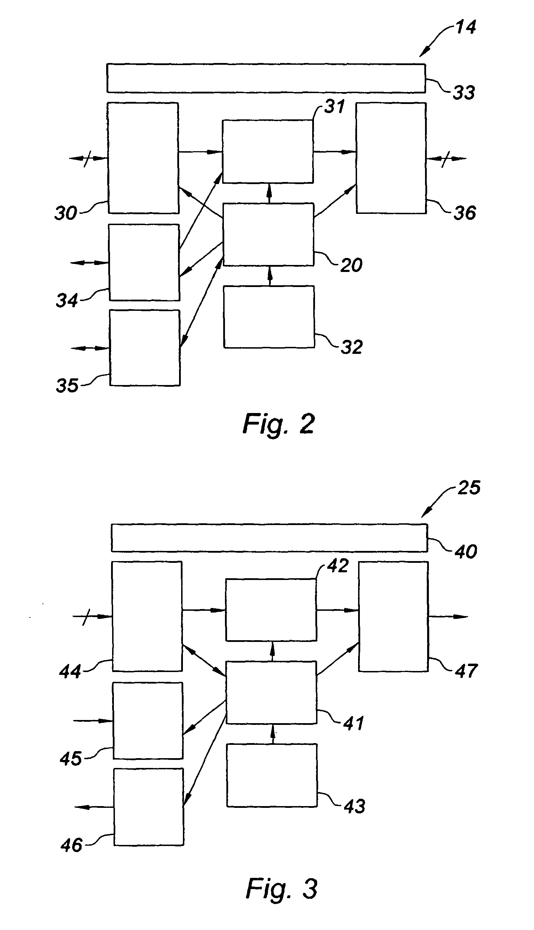

En se référant à la figure 2, on va maintenant décrire le dispositif 14. Le dispositif 14 comporte un module de contrôle général 20 pouvant s'appuyer par exemple sur un microcontrôleur, un module de traitement et de reconditionnement des données 31, un module de surveillance du fonctionnement et de l'alimentation 32, et un module d'alimentation 33.

En outre, le dispositif 14 dispose de plusieurs interfaces lui permettant de communiquer avec des équipements (non représentés sur la figure 2). Des interfaces d'espionnage et de retour d'état 30 permettent l'acquisition de données fonctionnelles (données propres à certains paramètres ou à certaines fonctions), de données de communication réseau (données de gestion des communications, données de gestion système, états électriques de certains paramètres liés à l'activité de communication sur les réseaux), ainsi que d'autres types de données qui peuvent provenir des équipements, telles que des données analogiques, ou provenant d'un transpondeur. Ces interfaces 30 utilisent notamment les protocoles CAN (controller area network) et LIN (local interconnect network). Les interfaces 30 comportent également des entrées en TOR (tout ou rien), PWM (Pulse-Width Modulation) et/ou IR (infrarouge). Une interface de diagnostic et de configuration 34 utilisant par exemple le protocole CAN permet la configuration du module 31. Cette interface 34 peut être une des interfaces également utilisées pour réaliser des échanges fonctionnels. Cette interface 34 permet l'activation des fonctions de traitement des informations acquises dans le module 31, le paramétrage de ces fonctions, ainsi que l'écriture et la lecture de paramètres de fabrication (Référence du produit, n° de série, date de fabrication, par exemple). Une interface de configuration et de téléchargement 35 utilisant le protocole USB est également prévue pour permettre le téléchargement de la partie logiciel et la configuration du module 20 via un ordinateur (non représenté). Des interfaces d'état et de commande 36 permettent d'émettre des données traitées, par exemple à destination du boîtier 13 (figure 1). On notera qu'il s'agit d'un cas particulier, les données traitées pouvant être émises à destination d'un équipement quelconque. Pour cela, les interfaces 36 comportent par exemple des sorties CAN, LIN, TOR ou PWM.

On notera que d'autres types d'interfaces peuvent être prévus pour permettre la communication du dispositif avec tout type d'équipement. On peut par exemple prévoir une liaison série RS232.

Une interface transpondeur HF (non représentée) permet une communication bilatérale permettant d'échanger des données d'identification avec le réseau 1, ce qui permet par exemple l'identification du conducteur pour le contrôle de ses déplacements. Le transpondeur (non représenté) intègre un code figé d'identification de l'utilisateur. Il peut être associé à un clavier.

Le module 20 permet de gérer les transfert de données entre les différents modules 31,32,33 et les différentes interfaces 30,34,35,36. Ces transferts de données sont symbolisés sur la figure 2 par des flèches. L'application logiciel s'appuie, de manière classique, sur l'exécution périodique d'un certain nombre de tâches, dont certaines ont un caractère prioritaire en matière de traitement. Le logiciel permet de gérer les ressources matérielles, c'est-à-dire les différents modules, et les tâches applicatives. L'ordonnancement des tâches peut être géré par un noyau temps réel.

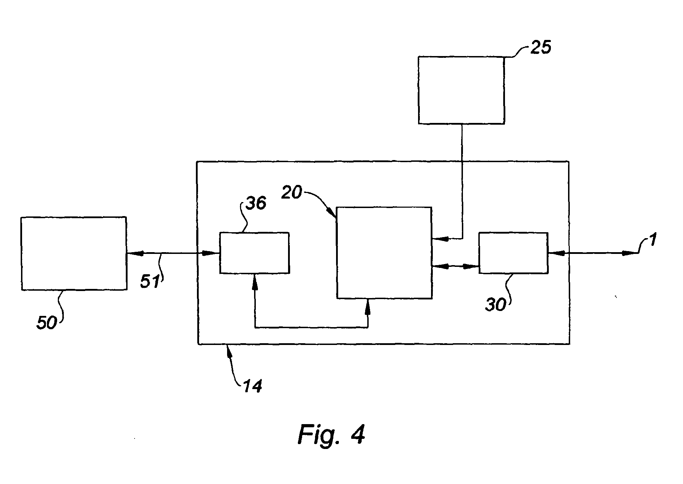

Une télécommande 25, visible sur la figure 4, permet l'émission de commandes à destination du dispositif 14. La télécommande 25 communique avec le dispositif 14 au moyen d'une transmission sans fil. On notera que cette communication peut également s'effectuer par un mode de transmission quelconque, par exemple haute fréquence ou infrarouge.

En se référant à la figure 3, on va maintenant décrire la télécommande 25. Un module d'alimentation 40 permet d'alimenter l'ensemble des composants de la télécommande 25, le module 40 étant par exemple alimenté par des piles de manière que la télécommande 25 soit autonome. Un module de contrôle général 41, pouvant s'appuyer par exemple sur un microcontrôleur, associé à un module de surveillance de fonctionnement et d'alimentation 43, permet de gérer l'ensemble des modules de la télécommande 25. Le microcontrôleur 41 comporte un module de gestion de l'énergie permettant de ne consommer que l'énergie nécessaire à l'accomplissement de la fonction acquisition-transmission. Un module d'acquisition 44 permet à un utilisateur, en combinaison avec un clavier (non représenté) ou tout autre moyen d'interface homme-machine, d'entrer une commande. Un module de traitement des états acquis 42 permet de traiter et de conditionner les données provenant du module 44 avant de les transmettre à une interface 47. En outre, pour polariser et gérer les informations en provenance d'un capteur de position absolue (non représenté), la télécommande 25 comporte un module d'acquisition de l'état du capteur de déplacement 45 et un module de polarisation des touches et du capteur de déplacement 46. L'interface d'émission 47 permet de communiquer avec le dispositif 14, de manière unilatérale, afin d'émettre des commandes à réaliser sur le véhicule.

En se référant aux figures 1 et 2, on va maintenant décrire le fonctionnement du dispositif 14 lorsqu'il est utilisé pour doubler la commande des phares.

La télécommande 25 sert d'interrupteur supplémentaire associé aux phares. Lorsque le dispositif 14 reçoit un signal provenant de la télécommande 25 contenant une commande d'allumage des phares, le dispositif 14 peut collecter les signaux qui circulent sur le bus 16. Lorsque le dispositif 14 a collecté ces signaux, le module 31 compare la commande émise par la télécommande 25 avec les autres commandes qui circulent sur le bus 16. En fonction de l'état actuel des phares et de la base de données de priorité du dispositif, le dispositif 14 décide si un signal de commande doit être émis à destination du boîtier de gestion 13 via la liaison multiplexée 15. Si un signal doit être émis, le module 31 le conditionne afin que le format du message émis corresponde au protocole de communication utilisé sur le réseau 15, puis l'émet sur le bus 15 via l'une des interfaces 36. On notera que le dispositif 14 réalise une fonction passerelle pour toutes les fonctions non doublées et gère par ailleurs les priorités et exclusions d'action simultanée sur la commande concernée et son doublage. L'opération est donc transparente pour le boîtier de gestion 13.

Le dispositif 14 peut également être utilisé pour ajouter un équipement dans le véhicule, comme cela va être décrit en référence à la figure 4. Dans ce cas, l'équipement 50 est connecté sur une des interfaces 36 du dispositif 14 par un câble 51, en fonction du protocole de communication utilisé par l'équipement 50, ou par des liaisons électriques conventionnelles. La télécommande 25 permet, comme dans l'exemple précédent, de transmettre des commandes à l'équipement 50. Lorsque le module 31 reçoit un signal de commande, il vérifie à partir des signaux circulant sur le réseau 1 que l'exécution de la commande ne risque pas de perturber le fonctionnement actuel du véhicule (ouverture du coffre lorsque le véhicule circule, par exemple). Si cette commande peut être exécutée sans perturber le système, le module 31 conditionne le signal de commande pour qu'il soit conforme au protocole de communication utilisé, puis le transmet à l'équipement 50 via le câble 51. Par exemple, dans le cas où l'équipement 50 est connecté au dispositif 14 par un câble analogique, le module 31 permet de gérer la mise à l'échelle du signal à transmettre, c'est-à-dire le réglage de l'offset et le coefficient d'échelle.

En variante, le dispositif 14 peut permettre de récupérer simultanément des informations circulant sur un ou plusieurs réseaux telles que des informations concernant la vitesse d'avancement, le régime moteur, le freinage, le frein de parking ou le recul.

Dans l'exemple décrit ci-dessus, le boîtier d'acquisition 3 permet l'acquisition de l'état des interrupteurs 4,5,6, mais ce boîtier 3 peut, bien entendu, permettre l'acquisition de tous types d'informations. Dans ce cas, les interrupteurs 4,5,6 sont remplacés par des dispositifs aptes à transmettre une information associée à l'état d'un équipement 10,11,12. En outre, les informations peuvent être des informations de commande ou d'état.

De la même manière, la télécommande 25 peut permettre le doublage d'une information de type quelconque, une correspondance étant possible entre l'information transmise par le boîtier 3 et l'information transmise par la télécommande 25. En outre, la télécommande 25 peut être remplacée par tout type de boîtier d'acquisition et de traitement comportant par exemple un clavier et un afficheur LCD, ou plus généralement une interface homme machine de type quelconque.

L'interface USB peut permettre de récupérer chaque jour des informations sur l'utilisation du véhicule, ou bien encore de télécharger ou paramétrer l'application.

Le dispositif 14 peut comporter une alarme.

Bien que l'invention ait été décrite en relation avec plusieurs modes de réalisations particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Réseau multiplexé (1) pour véhicule comportant :
un boîtier électronique d'acquisition d'au moins une information (3) associée à au moins un équipement (10, 11,12), apte à émettre un signal d'état ou de commande, en fonction de ladite au moins une information ; au moins un boîtier électronique d'acquisition et de traitement déporté (7,8,9) destiné à être connecté avec ledit au moins un équipement (10, 11, 12), apte à commander ledit au moins un équipement en fonction dudit signal d'état ou de commande émis par ledit boîtier électronique d'acquisition d'au moins une information (3) ; un boîtier électronique central de gestion (13) apte à gérer les transferts de données entre ledit boîtier électronique d'acquisition, d'au moins une information (3) et ledit au moins un boîtier électronique d'acquisition et de traitement déporté (7,8,9); et au moins un bus de transmission de données (2,15,16) apte à permettre la communication entre ledit boîtier électronique d'acquisition d'au moins une information (3), ledit boîtier électronique d'acquisition et de traitement déporté (7,8,9) et ledit boîtier électronique central de gestion (13), ledit réseau multiplexé comportant un dispositif de conditionnement d'informations (14), **caractérisé en ce que** ledit dispositif de conditionnement d'informations (14) est apte à échanger des informations d'une part avec ledit boîtier électronique d'acquisition d'au moins une information (3) et ledit boîtier électronique central de gestion (13) et d'autre part avec un boîtier d'acquisition et de traitement supplémentaire (25) qui est apte à être ajouté une fois que ledit réseau multiplexé a été conçu et industrialisé et qui est apte à transmettre un signal d'état ou de commande supplémentaire, et **en ce que** ledit dispositif de conditionnement d'informations (14) est apte à recevoir ledit signal d'état ou de commande et ledit signal d'état ou de commande supplémentaire, et à gérer, à l'aide d'un module (31) comportant une base de données de priorité, les priorités entre ledit signal d'état ou de commande et ledit signal d'état ou de commande supplémentaire et à émettre un nouveau signal d'état ou de commande correspondant sur ledit réseau multiplexé (1).

2. Réseau multiplexé selon la revendication 1, **caractérisé en ce que** ledit boîtier d'acquisition et de traitement supplémentaire (25) comporte une interface homme-machine (44).

3. Réseau multiplexé selon la revendication 1, **caractérisé en ce que** ledit boîtier d'acquisition et de traitement supplémentaire (25) communique avec ledit dispositif de conditionnement d'information (14) par une liaison sans fil.

4. Réseau multiplexé selon la revendication 1, **caractérisé en ce que** ledit boîtier d'acquisition et de traitement supplémentaire (25) est apte à émettre une information de doublage associée audit au moins un équipement (10, 11, 12), apte à doubler ladite au moins une information associée audit au moins un équipement.

5. Réseau multiplexé selon la revendication 1, **caractérisé en ce que** ledit dispositif de conditionnement d'informations (14) comporte au moins une interface supplémentaire apte à permettre la connexion d'un équipement supplémentaire avec ledit dispositif de conditionnement d'informations (14).

6. Réseau multiplexé selon la revendication 5, **caractérisé en ce que** ledit dispositif de conditionnement d'informations comporte au moins une interface utilisant le protocole LIN.

7. Réseau multiplexé selon la revendication 5, **caractérisé en ce que** ledit dispositif de conditionnement d'informations comporte au moins une interface utilisant le protocole USB.

8. Réseau multiplexé selon la revendication 5, **caractérisé en ce que** ledit dispositif de conditionnement d'informations comporte au moins une interface utilisant le protocole RS232.

9. Réseau multiplexé selon la revendication 5, **caractérisé en ce que** ledit dispositif de conditionnement d'informations comporte au moins une entrée analogique et une sortie analogique.

10. Dispositif de conditionnement d'informations (14) pour véhicule, ledit véhicule comprenant un réseau multiplexé (1) qui comporte : un boîtier électronique d'acquisition d'au moins une information (3) associée à au moins un équipement (10, 11, 12), apte à émettre un signal d'état ou de commande, en fonction de ladite au moins une information ; au moins un boîtier électronique d'acquisition et de traitement déporté (7,8,9) destiné à être connecté avec ledit au moins un équipement (10, 11, 12), apte à commander ledit au moins un équipement en fonction dudit signal d'état ou de commande émis par ledit boîtier électronique d'acquisition d'au moins une information (3) ; un boîtier électronique central de gestion (13) apte à gérer les transferts de données entre ledit boîtier électronique d'acquisition d'au moins une information (3) et ledit au moins un boîtier électronique d'acquisition et de traitement déporté (7,8,9); et au moins un bus de transmission de données (2,15,16) apte à permettre la communication entre ledit boîtier électronique d'acquisition d'au moins une information (3), ledit boîtier électronique d'acquisition et de traitement déporté (7,8,9) et ledit boîtier électronique central de gestion (13),
**caractérisé en ce que** ledit dispositif de conditionnement d'informations (14) est apte à communiquer
- d'une part avec ledit boîtier électronique d'acquisition d'au moins une information (3) et ledit boîtier électronique central de gestion (13),
- d'autre part avec un boîtier d'acquisition et de traitement supplémentaire (25) qui est apte à être ajouté une fois que ledit réseau multiplexé a été conçu et industrialisé et qui est apte à transmettre un signal d'état ou de commande supplémentaire, et **en ce que** ledit dispositif de conditionnement d'informations (14) est apte à recevoir ledit signal d'état ou de commande et ledit signal d'état ou de commande supplémentaire, et à gérer, à l'aide d'un module (31) comportant une base de données de priorité, les priorités entre ledit signal d'état ou de commande et ledit signal d'état ou de commande supplémentaire et à émettre un nouveau signal d'état ou de commande correspondant sur ledit réseau multiplexé (1).

## Claims

1. A multiplexed network (1) for a vehicle including:
an electronics box for acquiring at least one piece of information (3) associated with at least one piece of equipment (10, 11, 12), capable of transmitting a status or control signal, according to said at least one piece of information; at least one remote acquisition and processing electronics box (7, 8, 9) intended to be connected with said at least one piece of equipment (10, 11, 12), capable of controlling said at least one piece of equipment according to said status or control signal transmitted by said electronics box for acquiring at least one piece of information (3); a central management electronics box (13) capable of managing data transfers between said electronics box for acquiring at least one piece of information (3) and said at least one remote acquisition and processing electronics box (7, 8, 9); and at least one data transmission bus (2, 15, 16) able to allow communications between said electronics box for acquiring at least one piece of information (3), said remote acquisition and processing electronics box (7, 8, 9) and said central management electronics box (13), said multiplexed network including a device for packaging information (14), **characterized in that** said information packaging device (14) is capable of exchanging information with said electronics box for acquiring at least one piece of information (3) and said central management electronics box (13) on the one hand and with an additional acquisition and processing box (25) on the other hand, which is capable of being added once said multiplexed network has been designed and industrialized and which is capable of transmitting an additional status or control signal, and **in that** said information packaging device (14) is capable of receiving said status or control signal and said additional status or control signal, and of managing, with a module (31) including a priority database, the priorities between said status or control signal and said additional status or control signal, and of transmitting a new corresponding status or control signal on said multiplexed network (1).

2. The multiplexed network according to claim 1, **characterized in that** said additional acquisition and processing box (25) includes a man-machine interface (44).

3. The multiplexed network according to claim 1, **characterized in that** said additional acquisition and processing box (25) communicates with said information packaging device (14) through a wireless link.

4. The multiplexed network according to claim 1, **characterized in that** said additional acquisition and processing box (25) is capable of transmitting a duplication information associated with said at least one piece of equipment (10, 11, 12), capable of duplicating said at least one piece of information associated with said at least one piece of equipment.

5. The multiplexed network according to claim 1, **characterized in that** said information packaging device (14) includes at least one additional interface able to allow connection of an additional piece of equipment with said information packaging device (14).

6. The multiplexed network according to claim 5, **characterized in that** said information packaging device includes at least one interface using the LIN protocol.

7. The multiplexed network according to claim 5, **characterized in that** said information packaging device includes at least one interface using the USB protocol.

8. The multiplexed network according to claim 5, **characterized in that** said information packaging device includes at least one interface using the RS232 protocol.

9. The multiplexed network according to claim 5, **characterized in that** said information packaging device includes at least one analog input and one analog output.

10. A device for packaging information (14) for a vehicle, said vehicle comprising a multiplexed network (1) which includes: an electronics box for acquiring at least one piece of information (3) associated with at least one piece of equipment (10, 11, 12), capable of transmitting a status or control signal, according to said at least one piece of information; at least one remote acquisition and processing electronics box (7, 8, 9) intended to be connected with said at least one piece of equipment (10, 11, 12), capable of controlling said at least one piece of equipment according to said status or control signal transmitted by said electronics box for acquiring at least one piece of information (3); a central management electronics box (13) capable of managing data transfers between said electronics box for acquiring at least one piece of information (3) and said at least one remote acquisition and processing electronics box (7, 8, 9); and at least one data transmission bus (2, 15, 16) able to allow communication between said electronics box for acquiring at least one piece of information (3), said remote acquisition and processing electronics box (7, 8, 9) and said central management electronics box (13),
**characterized in that** said information packaging device (14) is capable of communicating
- with said electronics box for acquiring at least one piece of information (3) and said central management electronics box (13) on the one hand,
- with an additional acquisition and processing box (25) on the other hand, which is capable of being added once said multiplexed network has been designed and industrialized and which is capable of transmitting an additional status or control signal, and **in that** said information packaging device (14) is capable of receiving said status or control signal and said additional status or control signal, and of managing with a module (31) including a priority database, the priorities between said status or control signal and said additional status or control signal, and of transmitting a new corresponding status or control signal on said multiplexed network (1).

## Patentansprüche

1. Multiplex-Netzwerk (1) für ein Fahrzeug, das aufweist:
eine Elektronikeinheit zur Erfassung mindestens einer Information (3), die mindestens einer Ausrüstung (10, 11, 12) zugeordnet ist, die imstande ist, in Abhängigkeit der mindestens einen Information ein Zustands- oder Steuersignal auszugeben; mindestens eine versetzte Elektronikeinheit zur Erfassung und Verarbeitung (7, 8, 9), die dazu bestimmt ist, mit der mindestens einen Ausrüstung (10, 11, 12) gekoppelt zu sein, die imstande ist, die mindestens eine Ausrüstung in Abhängigkeit des Zustands- oder Steuersignals, das von der Elektronikeinheit zur Erfassung mindestens einer Information (3) ausgegeben wird, zu steuern; eine zentrale Verwaltungs-Elektronikeinheit (13), die imstande ist, die Datentransfers zwischen der Elektronikeinheit zur Erfassung mindestens einer Information (3) und der mindestens einen versetzten Elektronikeinheit zur Erfassung und Verarbeitung (7, 8, 9) zu verwalten; und mindestens einen Datenübertragungsbus (2, 15, 16), der imstande ist, die Kommunikation zwischen der Elektronikeinheit zur Erfassung mindestens einer Information (3), der versetzten Elektronikeinheit zur Erfassung und Verarbeitung (7, 8, 9) und der zentralen Verwaltungs-Elektronikeinheit (13) zu erlauben, wobei die Multiplex-Netzwerk eine Vorrichtung zum Paketieren von Informationen (14) aufweist, **dadurch gekennzeichnet, dass** die Vorrichtung zum Paketieren von Informationen (14) imstande ist, Informationen einerseits mit der Elektronikeinheit zur Erfassung mindestens einer Information (3) und der zentralen Verwaltungs-Elektronikeinheit (13) und andererseits mit einer zusätzlichen Einheit zur Erfassung und Verarbeitung (25) auszutauschen, die imstande ist, hinzugefügt zu sein, sobald das Multiplex-Netzwerk konzipiert und industrialisiert wurde und die imstande ist, ein zusätzliches Zustands- oder Steuersignal zu übertragen, und **dadurch**, dass die Vorrichtung zum Paketieren von Informationen (14) imstande ist, das Zustands- oder Steuersignal und das zusätzlich Zustands- oder Steuersignal zu empfangen und mit Hilfe eines Moduls (31), das eine Prioritätsdatenbank aufweist, die Prioritäten zwischen dem Zustands- oder Steuersignal und dem zusätzlichen Zustands- oder Steuersignal zu verwalten und ein entsprechendes neues Zustands-oder Steuersignal in das Multiplex-Netzwerk (1) auszugeben.

2. Multiplex-Netzwerk nach Anspruch 1, **dadurch gekennzeichnet, dass** die zusätzliche Einheit zur Erfassung und Verarbeitung (25) eine Mensch-Maschinen-Schnittstelle (44) aufweist.

3. Multiplex-Netzwerk nach Anspruch 1, **dadurch gekennzeichnet, dass** die zusätzliche Einheit zur Erfassung und Verarbeitung (25) mit der Vorrichtung zum Paketieren von Informationen (14) über eine drahtlose Verbindung kommuniziert.

4. Multiplex-Netzwerk nach Anspruch 1, **dadurch gekennzeichnet, dass** die zusätzliche Einheit zur Erfassung und Verarbeitung (25) imstande ist, eine Dopplungsinformation auszugeben, die der mindestens einen Ausrüstung (10, 11, 12) zugeordnet ist, die imstande ist, die mindestens eine Information, die der mindestens einen Ausrüstung zugeordnet ist, zu verdoppeln.

5. Multiplex-Netzwerk nach Anspruch 1, **dadurch gekennzeichnet, dass** die Vorrichtung zum Paketieren von Informationen (14) mindestens eine zusätzliche Schnittstelle aufweist, die imstande ist, die Kopplung einer zusätzlichen Ausrüstung mit der Vorrichtung zum Paketieren von Informationen (14) zu erlauben.

6. Multiplex-Netzwerk nach Anspruch 5, **dadurch gekennzeichnet, dass** die Vorrichtung zum Paketieren von Informationen mindestens eine Schnittstelle aufweist, die das LIN-Protokoll verwendet.

7. Multiplex-Netzwerk nach Anspruch 5, **dadurch gekennzeichnet, dass** die Vorrichtung zum Paketieren von Informationen mindestens eine Schnittstelle aufweist, die das USB-Protokoll verwendet.

8. Multiplex-Netzwerk nach Anspruch 5, **dadurch gekennzeichnet, dass** die Vorrichtung zum Paketieren von Informationen mindestens eine Schnittstelle aufweist, die das RS232-Protokoll verwendet.

9. Multiplex-Netzwerk nach Anspruch 5, **dadurch gekennzeichnet, dass** die Vorrichtung zum Paketieren von Informationen mindestens einen analogen Eingang und einen analogen Ausgang aufweist.

10. Vorrichtung zum Paketieren von Informationen (14) für ein Fahrzeug, wobei das Fahrzeug ein Multiplex-Netzwerk (1) umfasst, das aufweist: eine Elektronikeinheit zur Erfassung mindestens einer Information (3), die mindestens einer Ausrüstung (10, 11, 12) zugeordnet ist, die imstande ist, in Abhängigkeit der mindestens einen Information ein Zustands- oder Steuersignal auszugeben; mindestens eine versetzte Elektronikeinheit zur Erfassung und Verarbeitung (7, 8, 9), die dazu bestimmt ist, mit der mindestens einen Ausrüstung (10, 11, 12) gekoppelt zu sein, die imstande ist, die mindestens eine Ausrüstung in Abhängigkeit des Zustands-oder Steuersignals, das von der Elektronikeinheit zur Erfassung mindestens einer Information (3) ausgegeben wird, zu steuern; eine zentrale Verwaltungs-Elektronikeinheit (13), die imstande ist, die Datentransfers zwischen der Elektronikeinheit zur Erfassung mindestens einer Information (3) und der mindestens einen versetzten Elektronikeinheit zur Erfassung und Verarbeitung (7, 8, 9) zu verwalten; und mindestens einen Datenübertragungsbus (2, 15, 16), der imstande ist, die Kommunikation zwischen der Elektronikeinheit zur Erfassung mindestens einer Information (3), der versetzten Elektronikeinheit zur Erfassung und Verarbeitung (7, 8, 9) und der zentralen Verwaltungs-Elektronikeinheit (13) zu erlauben,
**dadurch gekennzeichnet, dass** die Vorrichtung zum Paketieren von Informationen (14) imstande ist zu kommunizieren
- einerseits mit der Einheit zur Erfassung mindestens einer Information (3) der zentralen Verwaltungs-Elektronikeinheit (13),
- andererseits mit einer zusätzlichen Einheit zur Erfassung und Verarbeitung (25), die imstande ist, hinzugefügt zu sein, sobald das Multiplex-Netzwerk konzipiert und industrialisiert wurde und die imstande ist, ein zusätzliches Zustands- oder Steuersignal zu übertragen,
und **dadurch**, dass die Vorrichtung zum Paketieren von Informationen (14) imstande ist, das Zustands- oder Steuersignal und das zusätzlich Zustands- oder Steuersignal zu empfangen und mit Hilfe eines Moduls (31), das eine Prioritätsdatenbank aufweist, die Prioritäten zwischen dem Zustands- oder Steuersignal und dem zusätzlichen Zustands- oder Steuersignal zu verwalten und ein entsprechendes neues Zustands- oder Steuersignal in das Multiplex-Netzwerk (1) auszugeben.
